# FASCICULE DE BREVET EUROPEEN

(11) **EP 3 894 813 B1**
(45) Date de publication et mention de la délivrance du brevet: **02.11.2022**
(21) Numéro de dépôt: 19806275.4
(22) Date de dépôt: 26.11.2019
(51) Int. Cl.: G01J 5/02, G01J 5/22

(54) **PROCEDE DE REALISATION D'UN DETECTEUR INFRAROUGE ET DETECTEUR INFRAROUGE ASSOCIE**
VERFAHREN ZUR HERSTELLUNG EINES INFRAROTDETEKTORS UND ZUGEHÖRIGER INFRAROTDETEKTOR
PROCESS FOR PRODUCING AN INFRARED DETECTOR AND ASSOCIATED INFRARED DETECTOR

(30) Priorité: 10.12.2018 FR 1872587
(43) Date de publication de la demande: 20.10.2021
(73) Titulaire: LYNRED, 91120 Palaiseau (FR)
(72) Inventeur: CORTIAL, Sébastien, 38360 SASSENAGE (FR)
(74) Mandataire: Cabinet Laurent & Charras
(86) Numéro de dépôt international: PCT/EP2019/082603
(87) Numéro de publication internationale: WO 2020/120129

(56) Documents cités:
- EP-A1- 2 743 659
- EP-A1- 2 902 758
- US-A1- 2013 235 210
- HU Y H ET AL: "Cu-Cu hybrid bonding as option for 3D IC stacking", 2012 IEEE INTERNATIONAL INTERCONNECT TECHNOLOGY CONFERENCE (IITC 2012) : SAN JOSE, CALIFORNIA, USA, 4 - 6 JUNE 2012, IEEE, PISCATAWAY, NJ, 4 juin 2012 (2012-06-04), pages 1-3, XP032211558, DOI: 10.1109/IITC.2012.6251571 ISBN: 978-1-4673-1138-0
- EMINOGLU SELIM ET AL: "MT3825BA: a 384x288-25 m ROIC for uncooled microbolometer FPAs", VISUAL COMMUNICATIONS AND IMAGE PROCESSING; 20-1-2004 - 20-1-2004; SAN JOSE,, vol. 9070, 26 juin 2014 (2014-06-26), pages 907024-907024, XP060036666, DOI: 10.1117/12.2057510 ISBN: 978-1-62841-730-2
- ADRIANA LAPADATU ET AL: "High-performance long wave infrared bolometer fabricated by wafer bonding", VISUAL COMMUNICATIONS AND IMAGE PROCESSING; 20-1-2004 - 20-1-2004; SAN JOSE,, vol. 7660, 5 avril 2010 (2010-04-05), pages 766016-1, XP007921961, DOI: 10.1117/12.852526 ISBN: 978-1-62841-730-2
- TEMPLE D ET AL: "High Density 3-D Integration Technology for Massively Parallel Signal Processing in Advanced Infrared Focal Plane Array Sensors", ELECTRON DEVICES MEETING, 2006. IEDM '06. INTERNATIONAL, IEEE, PI, 1 décembre 2006 (2006-12-01), pages 1-4, XP031078409, DOI: 10.1109/IEDM.2006.346980 ISBN: 978-1-4244-0438-4
- MOROOKA T ET AL: "THREE-DIMENSIONAL INTEGRATION OF FULLY DEPLETED SOI DEVICES", EXTENDED ABSTRACTS OF THE INTERNATIONAL CONFERENCE ON SOLIDSTATE DEVICES AND MATERIALS, JAPAN SOCIETY OF APPLIED PHYSICS. TOKYO, JA, vol. 2001, 26 September 2001 (2001-09-26), page 38/39, XP001074484,

## Description

### DOMAINE TECHNIQUE

L'invention concerne le domaine technique de l'imagerie infrarouge dite « non refroidie », c'est-à-dire le domaine technique des détecteurs infrarouges comportant des micro-bolomètres disposés en suspension sur un substrat pour réduire l'influence de la température du substrat et du milieu environnant sur les performances des micro-bolomètres.

L'invention trouve une application particulièrement avantageuse pour réduire l'encombrement d'un détecteur infrarouge comportant une électronique de traitements numériques ou toute fonction électronique additionnelle nécessitant d'augmenter la surface disponible, par exemple un circuit de lecture instantanée car, dans ce cas, il y a un besoin de surface additionnelle pour chaque pixel du détecteur.

### ART ANTERIEUR

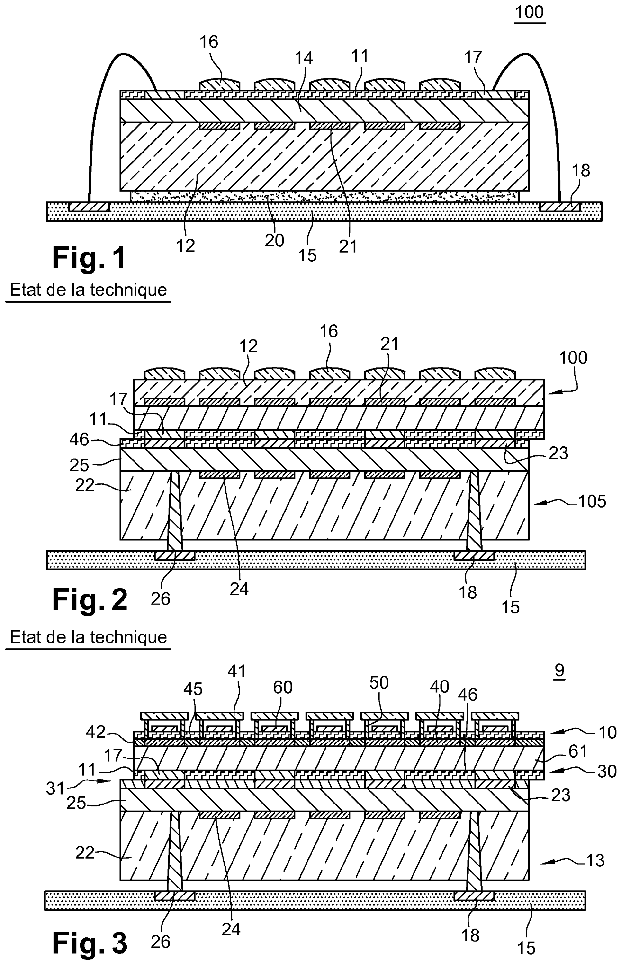

Tel qu'illustré sur la figure 1 de l'état de la technique, un détecteur d'images dans le spectre visible se présente généralement sous la forme d'une puce **100,** dite puce de détection, qui comporte des éléments photosensibles **21** à la lumière visible et un circuit de lecture réalisé classiquement en technologie CMOS. Les éléments photosensibles **21** sont formés à la jonction entre un réseau d'interconnexions métalliques **14** et un substrat semi-conducteur **12.**

Le circuit de lecture est constitué de transistors formés dans le substrat semi-conducteur **12** et reliés au réseau d'interconnexions métalliques **14.** Le circuit de lecture inclut un convertisseur analogique - numérique qui délivre un signal vidéo numérique brut, sur des contacts **17** de sortie de la puce de détection **100,** en fonction d'une image captée par les éléments photosensibles **21.** Ces contacts **17** émergent d'une couche d'oxyde **11** et sont reliés avec des contacts **18** disposés sur une carte électronique **15** sur laquelle la puce de détection **100** est fixée. Par exemple, la fixation peut être réalisée au moyen d'une colle **20.** En outre, une micro-lentille **16** est formée sur la couche d'oxyde **11** pour focaliser les rayons sur les éléments photosensibles **21.**

Cependant, dans cette configuration dite d'« éclairement par le dessus », les pertes sur le flux lumineux sont relativement importantes car celui-ci doit traverser la couche d'oxyde **11** et le réseau d'interconnexion métallique **14** avant de parvenir sur les éléments photosensibles **21.**

Dans le domaine du spectre visible, il est donc recherché de retourner la puce de détection **100** par rapport au flux lumineux pour limiter les pertes.

En outre, pour améliorer la qualité ou les informations contenues dans le signal vidéo numérique, par exemple en appliquant une correction d'image et/ou en associant un algorithme de détection de mouvement, il est connu d'associer une puce de traitement numérique à la puce de détection **100.** De la même manière, ces deux puces sont classiquement réalisées dans des technologies différentes car il n'est souvent pas possible d'intégrer les traitements numériques directement dans la puce de détection **100.**

Pour ces raisons, plusieurs technologies ont été développées dans le domaine du spectre visible afin de faciliter la connexion de deux puces de technologies éventuellement différentes entre elles.

Une première solution consiste à monter une première puce de détection sur une seconde puce, par exemple de traitement numérique, cette seconde puce étant elle-même montée sur une carte électronique. Les contacts de la seconde puce sont alors disposés autour de l'emplacement destiné à recevoir la puce de détection et des connexions, par exemple filaires, sont réalisées entre les contacts de la seconde puce et les contacts de la puce de détection et entre les contacts de la seconde puce et les contacts de la carte électronique. Cette solution présente le défaut d'augmenter largement l'encombrement et de générer des parasites ou des latences dans la communication entre les deux puces.

Pour limiter ce problème en supprimant les contacts autour de la puce de détection, une seconde solution propose de réaliser des voies de connexion à travers le substrat semi-conducteur de la puce de détection pour réaliser des contacts sous la puce de détection vers la puce de traitement.

Cependant, les voies doivent être positionnées autour de la zone occupée par les éléments photosensibles ce qui entraine tout de même une augmentation de l'encombrement de la puce de détection. A partir de ces solutions techniques, plusieurs variantes d'implémentation sont possibles, par exemple deux puces peuvent être assemblées sur deux faces opposées d'une même carte électronique par la technique des voies de connexion.

Ces deux solutions sont les seules solutions mises en œuvre dans le domaine de l'imagerie infrarouge non refroidie pour associer la puce de détection avec une autre puce, de traitement numérique par exemple. Dans ce domaine technique spécifique, les éléments photosensibles correspondent à des micro-bolomètres montés en suspension sur une couche supérieure de la puce de détection pour réduire l'influence de la température du substrat et du milieu environnant sur les micro-bolomètres. Pour réaliser ces micro-bolomètres en suspension, la technique classique consiste à utiliser au moins une couche sacrificielle déposée à la surface de la puce de détection, et dans laquelle des ouvertures sont créées pour permettre le dépôt de plots conducteurs permettant le maintien en suspension des micro-bolomètres. Sur cette couche sacrificielle, la structure des micro-bolomètres est ensuite formée de manière à ce que les plots conducteurs puissent soutenir les micro-bolomètres lors du retrait de la couche sacrificielle.

Dans l'imagerie du visible, il est connu de réaliser un collage face-à-face entre les deux puces pour limiter encore l'encombrement. Les éléments photosensibles sont alors éclairés à travers le substrat semi-conducteur de la puce de détection, une fois celui-ci aminci. Cette configuration est dite d'« éclairement par le dessous ».

Dans l'exemple de la figure 2 de l'état de la technique, une première puce de détection **100** est fixée sur une seconde puce **105** comportant des transistors **24** permettant des fonctions additionnelles de lecture ou de traitement numérique réalisés dans un substrat massif **22.** De préférence, la fixation entre les deux puces **100, 105** est obtenue par un « collage mixte », c'est-à-dire une adhésion entre les plages métalliques **17, 23** d'une part et entre les couches d'oxyde **11, 46** d'autre part. Par exemple, l'adhésion des plages métalliques **17, 23** peut être obtenue par thermocompression et l'adhésion des couches d'oxydes **11, 46** par adhésion moléculaire.

Cette technique est connue sous l'expression « *hybrid bonding* » dans la littérature anglo-saxonne.

La puce de détection **100** est retournée et la couche d'isolant **11** se retrouve disposée sous le substrat semi-conducteur **12.** Les contacts **17** affleurant à travers la couche d'isolant **11** sont positionnés sous la puce de détection **100** et ils sont mis en regard de contacts **23** de la seconde puce **105** lors du collage mixte des deux puces **100, 105.**

Le substrat semi-conducteur **12** est ensuite aminci pour limiter les pertes optiques et optimiser l'illumination des éléments photosensibles **21.** L'illumination est également contrôlée par une micro-lentille **16** formée sur la couche semi-conductrice **12.** Les connexions entre la carte électronique **15** et la seconde puce **105** sont, par exemple, réalisées par des voies de connexion traversantes **26** débouchant sur les métallisations **25,** et connectées sur des contacts **18** de la carte électronique **15,** disposés sous la seconde puce **105.**

Il s'ensuit que l'encombrement du mode de réalisation de la figure 2 est moindre en surface sur la carte électronique **15** que l'encombrement du mode de réalisation de la figure 1, alors même que le mode de réalisation de la figure 2 intègre une seconde puce **105** intégrant des fonctions de lecture ou de traitement numérique. Le gain estimé en surface sur la carte électronique est de l'ordre de 30 à 40%.

Cependant, ce mode de réalisation de la figure 2 impose une illumination par la face arrière des éléments photosensibles **21** puisque la puce de détection **100** est retournée.

Compte tenu des contraintes de fabrication en suspension des micro-bolomètres sur la face supérieure de la puce de détection, il semble impossible de reproduire directement ce mode de réalisation de la figure 2 dans le domaine de l'imagerie infrarouge non refroidie.

EP2743659 divulgue un dispositif de détection dans le domaine de l'imagerie infrarouge non refroidie.

Le problème technique de la présente invention est de réduire l'encombrement d'une puce de détection associée à une seconde puce intégrant des fonctions de lecture additionnelle ou de traitement numérique, dans le domaine de l'imagerie infrarouge non refroidie, c'est-à-dire pour une puce de détection comportant des micro-bolomètres montés en suspension sur une couche supérieure de la puce de détection.

### EXPOSE DE L'INVENTION

Pour répondre à ce problème, l'invention propose d'utiliser une puce de détection comportant une couche semi-conductrice complètement déplétée intégrant des transistors et autres éléments actifs permettant la fonction de lecture, avant de reporter la puce de détection sur une seconde puce et réaliser les micro-bolomètres en suspension après l'hybridation des deux puces entre elles.

Au sens de l'invention, une puce comportant une couche semi-conductrice complètement déplétée correspond à une technologie CMOS de type FDSOI pour l'expression anglo-saxonne « *Fully Depleted Silicon On Insulator* ». Cette puce comporte nativement une fine couche d'isolant et une fine couche semi-conductrice intercalées entre le substrat et les interconnexions métalliques du circuit CMOS. La fine couche d'isolant est appelée couche d'oxyde profond, et la fine couche semi-conductrice est appelée « Silicium sur isolant » (SOI) bien que d'autres matériaux semi-conducteurs puissent être utilisés tels que le germanium ou l'arséniure de gallium. Cette puce se présente donc nativement avec un substrat, surmonté par une couche d'oxyde profond, puis une fine couche semi-conductrice dans laquelle sont réalisés des transistors et autres éléments actifs, et un réseau d'interconnexions métalliques se terminant en surface par une couche d'isolant au travers de laquelle des contacts électriques peuvent émerger. La finesse de la couche semi-conductrice permet d'obtenir une circulation des charges dans toute l'épaisseur de la couche semi-conductrice.

A cet effet, selon un premier aspect, l'invention concerne un procédé de réalisation d'un détecteur infrarouge comportant les étapes suivantes :
- collage mixte d'une puce de détection sur une seconde puce ; lors du collage mixte ;
   ▪ ladite puce de détection comportant un substrat surmonté par une couche d'oxyde profond, une couche semi-conductrice complètement déplétée intégrant des transistors, un réseau d'interconnexions métalliques, et une couche d'isolant;
   ▪ ladite puce de détection comportant une face d'hybridation présentant des contacts émergeant de ladite couche d'isolant et connectés au réseau d'interconnexions métalliques ; et
   ▪ ladite seconde puce comportant un substrat dans lequel sont réalisés des transistors et des contacts émergeant d'une couche d'isolant au niveau d'une face d'hybridation ;
   l'étape de collage mixte étant réalisée par adhésion des contacts et des couches d'isolant des deux puces ;
- suppression du substrat de ladite puce de détection jusqu'à atteindre ladite couche d'oxyde profond ;
- réalisation de plots conducteurs à travers ladite couche d'oxyde profond pour atteindre les transistors présents dans ladite couche semi-conductrice ; et
- réalisation de micro-bolomètres en suspension sur ladite couche d'oxyde profond et connectés électriquement aux plots conducteurs.

L'invention permet ainsi d'obtenir un détecteur infrarouge intégrant des fonctions analogiques déportées ou des fonctions numériques avancées, réalisées par la seconde puce, tout en présentant une faible surface sur une carte électronique. Il est donc possible de fournir des détecteurs infrarouges intégrant des fonctions complexes à moindre coût de production et d'une très haute compacité. L'invention décrit l'utilisation de transistors dans les puces. Bien entendu, ces transistors peuvent être complétés par d'autres éléments actifs, notamment de type diodes.

En outre, les micro-bolomètres peuvent présenter des structures équivalentes aux structures actuelles, si bien que les performances du détecteur infrarouge ne sont pas réduites.

Pour augmenter les performances des micro-bolomètres, le procédé peut comporter également une étape de réalisation d'un réflecteur métallique sur ladite couche d'oxyde profond. Ce réflecteur a pour effet de renvoyer une partie de l'énergie thermique arrivant sur la couche d'oxyde profond vers la membrane bolométrique de chaque bolomètre, créant ainsi une cavité résonante, dite de Fabry-Perot.

Selon une disposition particulière de l'invention, le procédé comporte également une étape de réalisation de contacts à travers ladite couche d'oxyde profond pour atteindre une zone de ladite couche semi-conductrice connectée au réseau d'interconnexions métalliques, ledit réflecteur métallique étant réalisé sur lesdits contacts de sorte à former une électrode ou un plan de masse. En effet, l'ensemble des réflecteurs ou électrodes peuvent, par exemple, être reliés entre eux pour former un plan de masse en regard des transistors présents dans la couche semi-conductrice du circuit de lecture.

En outre, les micro-bolomètres peuvent être réalisés avec des procédés connus et maîtrisés, typiquement en utilisant des plots conducteurs formés dans une couche sacrificielle, et en réalisant une membrane détectrice sur la couche sacrificielle et connectée aux plots conducteurs.

Selon un mode de réalisation, ladite couche semi-conductrice étant divisée, dans l'empreinte de chaque pixel, en plusieurs zones distinctes formant un transistor d'injection, l'étape de réalisation de micro-bolomètres est réalisée de sorte à connecter en série chaque micro-bolomètre sur un transistor d'injection. Ce transistor d'injection a pour rôle de générer une tension électrique contrôlée sur ledit micro-bolomètre. De préférence, les zones distinctes de ladite couche semi-conductrice forment au moins les pôles d'un transistor de type MOSFET.

De préférence, ladite étape de collage mixte étant réalisée par thermocompression des contacts et par adhésion moléculaire des couches d'isolant des deux puces.

Selon un second aspect, l'invention concerne un détecteur infrarouge comportant :
- une puce de détection comportant des transistors connectés d'une part à des micro-bolomètres montés en suspension sur une couche d'oxyde profond et, d'autre part, à travers un réseau d'interconnexions métalliques, à des contacts émergeant d'une couche d'isolant ; et
- une seconde puce intégrant des transistors connectés à des contacts émergeant d'une couche d'isolant ;
les contacts et ladite couche d'isolant de ladite puce de détection étant collés avec les contacts et ladite couche d'isolant de ladite seconde puce.

Les transistors de la seconde puce peuvent présenter diverses fonctions et peuvent être complétés par d'autres éléments actifs, tels que des diodes. Par exemple, les transistors viennent compléter ceux de la première puce pour réaliser le circuit de lecture, pour prendre en charges des fonctions déportées ou réaliser un traitement numérique du signal issu de la puce de détection. La complémentarité des transistors des deux puces permet d'obtenir des fonctions de traitement appliquées pixel par pixel et non plus seulement de manière globale, ce qui est impossible avec d'autres techniques de report classiques.

### DESCRIPTION SOMMAIRE DES FIGURES

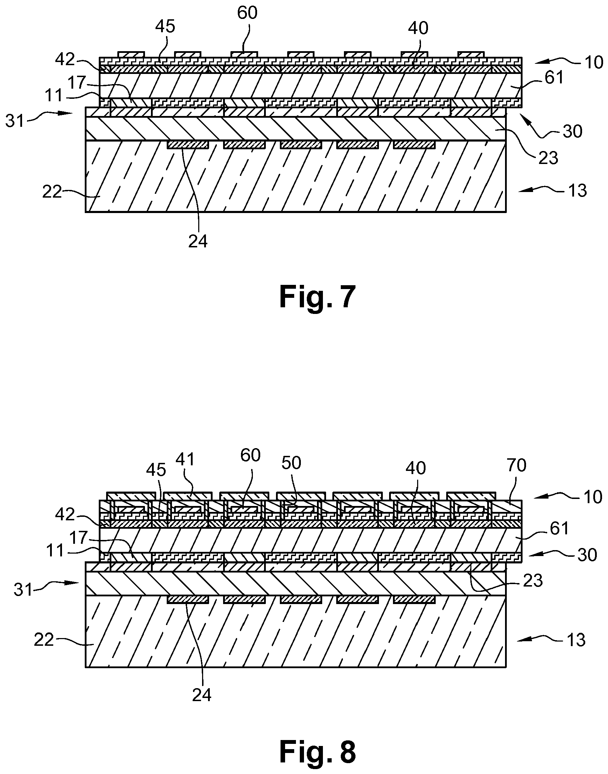

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 et 8 représentent :
- Figure 1 : une vue en section d'une puce de détection montée directement sur une carte électronique selon l'état de la technique ;
- Figure 2 : une vue en section d'une puce de détection dans le domaine visible montée sur une seconde puce selon l'état de la technique ;
- Figure 3 : une vue en section d'un détecteur infrarouge selon un mode de réalisation de l'invention ;
- Figure 4 : une vue de dessus localisée d'un élément de détection du détecteur infrarouge de la figure 3 (fig. 4b) représentant un transistor d'injection et un micro-bolomètre connectés en série, ainsi que des vues en section partielle selon l'axe AA' (fig. 4a) et l'axe BB' (fig. 4c) ;
- Figure 5 : une vue en section d'une étape de fabrication d'une puce de détection (fig. 5a) et d'une seconde puce (fig. 5b) du détecteur infrarouge de la figure 3 ;
- Figure 6 : une vue en section d'une étape de collage mixte des puces de la figure 5 ;
- Figure 7 : une vue en section d'une étape de réalisation de plots sur la puce de détection de la figure 6 ; et
- Figure 8 : une vue en section d'une étape de réalisation de micro-bolomètres sur les plots de la figure 7.

### DESCRIPTION DETAILLEE DE L'INVENTION

La présente invention est ci-après décrite en référence à l'hybridation d'une seule puce de détection sur une seule seconde puce, ce pour des raisons de simplicité de compréhension et d'illustration. En pratique, l'invention sera le plus souvent mise en œuvre pour coller simultanément une tranche intégrant plusieurs puces de détection avec une tranche intégrant plusieurs secondes puces.

La figure 3 illustre une vue en section d'un détecteur infrarouge **9** selon un mode de réalisation de l'invention. Ce détecteur infrarouge **9** comporte deux puces distinctes et superposées pour réduire la surface d'utilisation du détecteur infrarouge **9** sur une carte électronique **15.**

Pour ce faire, une puce de détection **10** est montée sur une seconde puce **13,** elle-même montée sur la carte électronique **15.** Les connexions entre la carte électronique **15** et la seconde puce **13** sont réalisées par des voies de connexion **26** sur un réseau d'interconnexions métalliques **25** de la seconde puce **13** et connectées sur des contacts **18** de la carte électronique **15.** Ainsi, en utilisant des voies de connexion **26,** il est possible de connecter la seconde puce **13** par l'intermédiaire de contacts **18** disposés sous la seconde puce **13.** En pratique, des billes de soudure sont classiquement disposées sur les contacts **18** pour assurer un contact électrique et un maintien entre les voies de connexion **26** et les contacts **18.** En variante, d'autres types de connexion peuvent être utilisées entre la seconde puce **13** et la carte électronique **15.**

Cette seconde puce **13** comporte des transistors **24** qui peuvent être utilisés avec d'autres éléments actifs, tels que des diodes. Par exemple, ces transistors **24** permettent de réaliser différentes fonctions qui ne peuvent être intégrées dans la surface du pixel du circuit de détection : lecture simultanée des éléments de détection de type « *snapshot* », ou conversion analogique-numérique au niveau du pixel, ou un traitement numérique du signal issu de la puce détection **10.** En variante, tout autre traitement peut être mis en œuvre par les transistors **24** sans changer l'invention.

Cette seconde puce **13** présente également des contacts **23** émergeant d'une face supérieure de la seconde puce **13** et connectés aux transistors **24.** La face supérieure de cette seconde puce **13** correspond à une face d'hybridation **31** qui est opposée à la face de cette seconde puce **13** destinée à venir en regard de la carte électronique **15.**

Au sens de l'invention, la formulation selon laquelle les contacts « émergent » d'une face indique que les contacts sont coplanaires avec une extrémité terminale de la puce au niveau de la face. Cependant, sur les dessins, la finesse de ces contacts ne permet pas de les représenter autrement que schématiquement.

La puce de détection **10** est fixée sur cette seconde puce **13** au niveau de contacts **17** émergeant d'une face d'hybridation **30** de la puce de détection **10.** Pour ce faire, un collage mixte est réalisé alors que les faces d'hybridation **30** et **31** sont planarisées et les contacts **17** et **23** sont noyés dans une matrice d'oxyde de silicium. Une adhésion moléculaire est obtenue par collage mixte entre les surfaces d'oxyde de silicium, tandis que les contacts **17** et **23,** typiquement en cuivre, sont soudés par thermo compression.

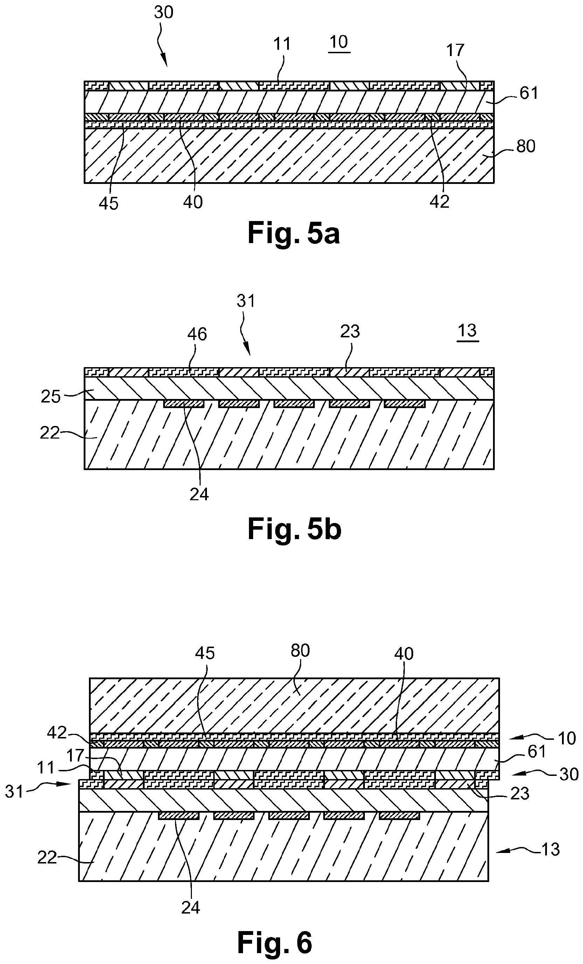

Tel qu'illustré sur les figures 5a et 5b, les éléments constitutifs de la puce de détection **10** et de la seconde puce **13** sont préférentiellement réalisés avant le collage mixte de la puce de détection **10** sur la seconde puce **13.** Pour ce faire, la puce de détection **10** est réalisée sur un substrat **80** surmonté par une couche d'oxyde profond **45,** puis une fine couche semi-conductrice **42** complètement déplétée dans laquelle sont réalisés des transistors, et un réseau d'interconnexions métalliques **61** se terminant en surface par une couche d'isolant **11** au travers de laquelle des contacts électriques **17** peuvent émerger.

Lors du collage mixte, la puce de détection **10** est retournée de sorte que les contacts **17** soient désormais disposés au niveau de la partie inférieure de la puce de détection **10.** Après avoir fait correspondre les contacts **17** de la puce de détection **10** avec les contacts **23** de la seconde puce **13,** il est possible que la puce de détection **10** soit légèrement décalée par rapport à la seconde puce **13,** tel qu'illustré sur les figures 3 et 6 à 8.

Bien entendu, le décalage illustré est exagéré et vise uniquement à illustrer le report qui a eu lieu entre les deux puces **10** et **13.** Suite au report de la puce de détection **10** sur la seconde puce **13,** le substrat **80** de la puce de détection **10** peut être retiré par traitement physique ou chimique jusqu'à atteindre la couche d'oxyde profond **45.**

Des ouvertures sont ensuite réalisées à travers la couche d'oxyde profond **45** pour atteindre les transistors **40** de la couche semi-conductrice **42** de la puce de détection **10.** Pour obtenir une continuité électrique satisfaisante, un contact ohmique peut être réalisé par siliciuration sur la surface de la couche semi-conductrice **42** au niveau des ouvertures préalablement réalisées. Pour former chaque micro-bolomètre **41,** il est ensuite possible de former deux plots conducteurs **50a** et **50b** à travers une couche sacrificielle déposée sur la couche d'oxyde profond **45,** de sorte que le courant soit injecté dans le micro-bolomètre **41** par le plot **50a** et que le courant retourne aux transistors **40** par le plot **50b.** Les plots conducteurs **50** sont disposés à l'aplomb des contacts réalisés préalablement.

De préférence, les plots conducteurs **50** sont disposés sur des zones spécifiques de la couche semi-conductrice **42,** rendues très conductrices par un fort dopage local, par exemple N++. Ce traitement est réalisé bien en amont lors de la fabrication du circuit CMOS en utilisant classiquement des procédés d'implantation. Ainsi, chaque pixel du détecteur infrarouge **9** est formé directement sur un transistor de type MOSFET, pour l'expression anglo-saxonne « *Métal Oxide Semiconductor Field Effect Transistor* », et connecté à celui-ci d'une façon appropriée dans le but de fournir une polarisation contrôlée à chaque micro-bolomètre

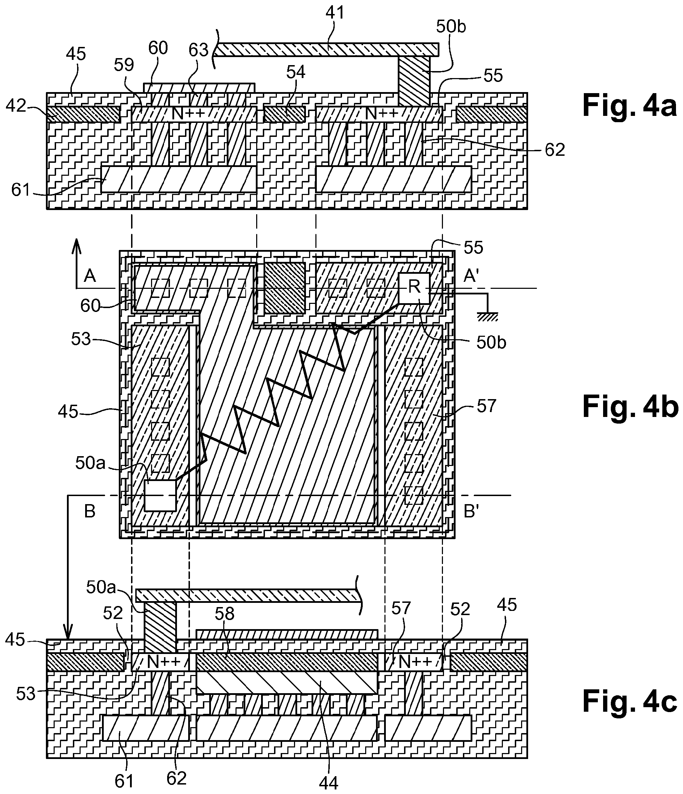

Pour former ce transistor MOSFET, la couche semi-conductrice **42** est par exemple structurée par une zone **53** de dopage N++ formant le drain du transistor MOSFET, juxtaposée avec une zone **58** faiblement dopée de type P formant le canal du transistor MOSFET et également juxtaposée avec une seconde zone **57** dopée N++ formant la source du transistor MOSFET. Le rebouclage du courant après son passage par le micro-bolomètre est assuré par une zone **55** dopée N++, tel qu'illustré sur les figures 4a-4c.

Le transistor précédemment décrit est un transistor de type PMOS car le canal est dopé de type P. Bien entendu, il ne s'agit que d'un exemple et l'invention peut également être réalisée sur un transistor de type NMOS en inversant les dopages. En outre, l'occupation de l'espace décrit sur les figures 4a-4c constitue uniquement un exemple très simple. Dans la réalité et surtout pour les petits pixels, le transistor d'injection est commun à un groupe de 2 ou 4 pixels, et il est entouré de nombreux autres transistors beaucoup plus petits qui remplissent la fonction d'interrupteurs.

Préférablement, lors de la fabrication des transistors sur la puce de détection **10,** des tranchées sont réalisées dans la couche semi-conductrice **42** pour délimiter le périmètre de chaque transistor MOSFET ou des zones dédiées au passage du courant vers le bolomètre, puis ces ouvertures sont comblées par le dépôt d'un matériau isolant. Cela permet d'isoler chaque transistor vis-à-vis de perturbations électriques issues des zones voisines.

Ainsi, tel qu'illustré sur la coupe BB', la structure de la couche semi-conductrice **42** le long d'un transistor présente donc une zone **52** d'isolant, une zone **53** dopée N++, une zone **58** dopée P, une zone **57** dopée N++, et une zone **52** d'isolant. La coupe AA' se compose d'une zone **55** indépendante et dopée N++ permettant le rebouclage du courant après son passage dans le bolomètre, d'une zone **54** non dopée et non utilisée, et d'une seconde zone dopée N++ **59.** Les trois zones **54, 59** et **55** sont isolées par des tranchées remplies d'un matériau d'isolant **52.**

Chaque micro-bolomètre **41** est formé en suspension à partir d'un plot conducteur **50a** connecté sur le drain **53** du transistor MOSFET jusqu'à atteindre le plot conducteur **50b** connecté sur la zone **55** dopée N++ formant le rebouclage du courant vers le circuit. La zone **58,** dopée P, qui correspond au canal du transistor, est disposée entre les deux zones **53** et **57** dopées N++ qui correspondent respectivement au drain et à la source dudit transistor. La grille **44** dudit transistor est reliée au réseau d'interconnexion **61** du circuit de lecture de la puce de détection, de manière qu'une tension électrique contrôlée peut y être appliquée. Ainsi, ledit transistor permet d'ajuster la polarisation appliquée sur le bolomètre attenant. Les transistors sont ensuite reliés par des plots **62** au réseau d'interconnexions métalliques **61.**

De préférence, pour améliorer les propriétés de détection du micro-bolomètre **41** formé sur les plots **50a** et **50b,** il est possible de recouvrir la surface de l'oxyde profond **45,** sur une zone correspondant à la grille **58** par un réflecteur **60.** Selon une disposition particulière de l'invention, ce réflecteur **60** peut également être connecté à la zone **59** dopée N++ de la couche semi-conductrice **42,** celle-ci étant elle-même connectée au réseau d'interconnexion **61** interne du circuit de lecture de la puce de détection. Ainsi, le réflecteur **60** permet également d'appliquer sur la face opposée à la grille du transistor, un champ électrique sur le canal du transistor MOSFET à travers l'oxyde profond **45.** Ce dispositif permet de confiner les charges qui circulent dans la zone **58** au centre de la couche semi-conductrice **42.**

Tel qu'illustré sur la figure 7, ce réflecteur **60** peut être déposé sur la couche d'oxyde profond **45** avant la réalisation des plots conducteurs **50.** Ainsi, après la fixation de la puce de détection **10** sur la seconde puce **13** par collage hybride puis élimination du substrat de la puce **10,** le procédé de réalisation peut comporter les étapes suivantes :
- création d'ouvertures dans la couche d'oxyde profond **45** au-dessus des zones **53** et **55** afin de recevoir les plots conducteurs **50a** et **50b** et au-dessus de la zone **59** pour connecter le réflecteur **60** ;
- réalisation de contacts ohmiques dans les ouvertures ;
- réalisation du réflecteur **60** sur la couche d'oxyde profond **45** ;
- dépôt de la couche sacrificielle **70** ;
- réalisation des plots conducteurs **50a, 50b** ; et
- réalisation des micro-bolomètres **41.**

Il est également possible de protéger les contacts ohmiques au-dessus des zones **53** et **55** lors de la réalisation du réflecteur **60** en réalisant ces contacts après la réalisation du réflecteur **60.** Ainsi, le procédé de réalisation peut comporter les étapes suivantes :
- création d'une ouverture dans la couche d'oxyde profond **45** au-dessus de la zone **59** pour connecter le réflecteur **60** ;
- réalisation de contacts ohmiques dans l'ouverture ;
- réalisation du réflecteur **60** sur la couche d'oxyde profond **45** ;
- création d'ouvertures dans la couche d'oxyde profond **45** au-dessus des zones **53** et **55** afin de recevoir les plots conducteurs **50a** et **50b** ;
- réalisation de contacts ohmiques dans les ouvertures ;
- dépôt de la couche sacrificielle **70** ;
- réalisation des plots conducteurs **50a, 50b** ; et
- réalisation des micro-bolomètres **41.**

L'invention permet ainsi d'obtenir un détecteur infrarouge **9** utilisant une faible surface sur une carte électronique **15** tout en intégrant des fonctions avancées, telles que lecture simultanée des éléments de détection de type « snapshot », ou conversion analogique-numérique au niveau du pixel ou des traitements numériques.

## Revendications

1. Procédé de réalisation d'un détecteur infrarouge (9) comportant les étapes suivantes :
- collage mixte d'une puce de détection (10) sur une seconde puce (13), et lors du collage mixte ;
▪ ladite puce de détection (10) comportant un substrat (80) surmonté par une couche d'oxyde profond (45), une couche semi-conductrice (42) complètement déplétée intégrant des transistors (40), un réseau d'interconnexions métalliques (61), et une couche d'isolant (11) ;
▪ ladite puce de détection (10) comportant une face d'hybridation (30) présentant des contacts (17) émergeant de ladite couche d'isolant (11) et connectés au réseau d'interconnexions métalliques (61) ; et
▪ ladite seconde puce (13) comportant un substrat (22) dans lequel sont réalisés des transistors (24) et des contacts (23) émergeant d'une couche d'isolant (46) au niveau d'une face d'hybridation (31) ;
l'étape de collage mixte étant réalisée par adhésion des contacts (17, 23) et des couches d'isolant (11, 46) des deux puces (10, 13) ;
- suppression du substrat (80) de ladite puce de détection (10) jusqu'à atteindre ladite couche d'oxyde profond (45) ;
- réalisation de plots conducteurs (50) à travers ladite couche d'oxyde profond (45) pour atteindre les transistors (40) présents dans ladite couche semi-conductrice (42) ; et
- réalisation de micro-bolomètres (41) en suspension sur ladite couche d'oxyde profond (45) et connectés électriquement aux plots conducteurs (50).

2. Procédé de réalisation d'un détecteur infrarouge selon la revendication 1, ***dans lequel*** le procédé comporte également une étape de réalisation d'un réflecteur métallique (60) sur ladite couche d'oxyde profond (45).

3. Procédé de réalisation d'un détecteur infrarouge selon la revendication 2, ***dans lequel*** le procédé comporte également une étape de réalisation de contacts (63) à travers ladite couche d'oxyde profond (45) pour atteindre une zone (59) de ladite couche semi-conductrice (42) connectée au réseau d'interconnexions métalliques (61), ledit réflecteur métallique (60) étant réalisé sur lesdits contacts (63) de sorte à former une électrode ou un plan de masse.

4. Procédé de réalisation d'un détecteur infrarouge selon l'une des revendications 1 à *3, **dans lequel,*** ladite couche semi-conductrice (42) étant divisée, dans l'empreinte de chaque pixel, en plusieurs zones distinctes (53, 57, 58) formant un transistor d'injection, l'étape de réalisation de micro-bolomètres (41) est réalisée de sorte à connecter en série chaque micro-bolomètre (41) sur un transistor d'injection.

5. Procédé de réalisation d'un détecteur infrarouge selon la revendication 4, ***dans lequel*** les zones distinctes (53, 57, 58) de ladite couche semi-conductrice (42) forment un transistor de type MOSFET.

6. Procédé de réalisation d'un détecteur infrarouge selon l'une des revendications 1 à *5, **dans lequel*** l'étape de réalisation de de plots conducteurs (50) et l'étape de réalisation de micro-bolomètres (41) en suspension sur ladite couche d'oxyde profond (45) sont réalisées par utilisation d'au moins une couche sacrificielle (70).

7. Procédé de réalisation d'un détecteur infrarouge selon l'une des revendications 1 à *6, **dans lequel*** ladite étape de collage mixte étant réalisée par thermocompression des contacts (17, 23) et par adhésion moléculaire des couches d'isolant (11, 46) des deux puces (10, 13).

8. Détecteur infrarouge (9) comportant :
- une puce de détection (10) comportant des transistors (40),
▪ connectés d'une part à des micro-bolomètres (41) montés en suspension sur une couche d'oxyde profond (45) et,
▪ connectés d'autre part, à travers un réseau d'interconnexions métalliques (61), à des contacts (17) émergeant d'une couche d'isolant (11) ; et
- une seconde puce (13) intégrant des transistors (24) connectés à des contacts (23) émergeant d'une couche d'isolant (46) ;
***caractérisé* en ce que** les contacts (17) et la couche d'isolant (11) de ladite puce de détection (10) sont collés avec les contacts (23) et la couche d'isolant (46) de ladite seconde puce (13).

9. Détecteur infrarouge selon la revendication 8, ***dans lequel*** les transistors (24) de ladite seconde puce (13) complètent les transistors (40) de ladite puce de détection (10) pour réaliser un circuit de lecture des micro-bolomètres (41).

10. Détecteur infrarouge selon la revendication 8, ***dans lequel*** les transistors (24) de ladite seconde puce (13) réalisent un traitement numérique d'un signal issu de ladite puce de détection (10).

## Patentansprüche

1. Verfahren zu Herstellung eines Infrarotdetektors (9), das aus den folgenden Schritten besteht:
- hybrides Bonden eines Sensorchips (10) auf einen zweiten Chip (13), und während des hybriden Bondens:
▪ enthält dieser Sensorchip (10) ein Substrat (80) über dem eine tiefe Oxidschicht (45) liegt, eine Halbleiterschicht (42), vollständig depletiert, die Transistoren (40) enthält, ein Netz metallischer Verbindungen (61), und eine Isolierschicht (11);
▪ enthält dieser Sensorchip (10) eine Hybridisierungsseite (30), die Kontakte (17) aufweist, aus denen diese Isolierschicht (11) ragt und die an das Netz metallischer Verbindungen (61) angeschlossen sind; und
▪ enthält der erwähnte zweite Chip (13) ein Substrat (22) in dem Transistoren (24) und Kontakte (23) ausgeführt sind, die aus einer Isolierschicht (46) in Höhe einer Hybridisierungsseite (31) herausragen:
der Schritt des hybriden Bondens wird ausgeführt durch Kleben der Kontakte (17, 23) und der Isolierschichten (11, 46) der beiden Chips (10, 13);
- Entfernen des Substrats (80) dieses Sensorchip (10) bis zum Erreichen der erwähnten tiefen Oxidschicht (45);
- Herstellung von leitfähigen Pads (50) durch diese tiefe Oxidschicht (45) hindurch, um die in dieser Halbleiterschicht (42) enthaltenen Transistoren (40) zu erreichen; und
- Ausführung von Mikrobolometern (41), die in dieser tiefen Oxidschicht (45) in Suspension befindlich und elektrisch mit den leitfähigen Pads (50) verbunden sind.

2. Verfahren zur Herstellung eines Infrarotdetektors nach Anspruch 1, ***bei dem*** das Verfahren auch einen Schritt der Herstellung eines Metallreflektors (60) auf dieser tiefen Oxidschicht (45) umfasst.

3. Verfahren zur Herstellung eines Infrarotdetektors nach Anspruch 2, ***bei dem*** das Verfahren auch einen Schritt der Herstellung von Kontakten (63) durch diese tiefe Oxidschicht (45) hindurch umfasst, um eine Zone (59) dieser Halbleiterschicht (42) zu erreichen, die mit dem Netz metallischer Verbindungen (61) verbunden ist, der erwähnte Metallreflektor (60) wird dabei über diesen Kontakten (63) gebildet, um so eine Elektrode oder eine Masseebene zu bilden.

4. Verfahren zur Herstellung eines Infrarotdetektors nach einem der Ansprüche 1 bis 3, ***bei dem*** die erwähnte Halbleiterschicht (42) im Abdruck jedes Pixels in mehrere verschiedene Zonen (53, 57, 58) unterteilt ist, die einen Injektionstransistor bilden, der Schritt der Ausführung der Mikrobolometer (41) wird so ausgeführt, dass jeder der Mikrobolometer (41) mit einem Injektionstransistor verbunden wird.

5. Verfahren zur Herstellung eines Infrarotdetektors nach Anspruch 4, ***bei dem*** die unterschiedlichen Zonen (53, 57, 58) der erwähnten Halbleiterschicht (42) einen Transistor vom MOSFET - Typ bilden.

6. Verfahren zur Herstellung eines Infrarotdetektors nach einem der Ansprüche 1 bis 5, ***bei dem*** der Schritt der Herstellung der leitfähigen Pads (50) und der Schritt der Herstellung der auf dieser tiefen Oxidschicht (45) in Suspension befindlichen Mikrobolometer (41), durch Nutzung mindestens einer Opferschicht (70) ausgeführt werden.

7. Verfahren zur Herstellung eines Infrarotdetektors nach einem der Ansprüche 1 bis 6, ***bei dem*** der erwähnte Schritt des hybriden Bondens durch Thermokompression der Kontakte (17, 23) und durch molekulare Adhäsion der Isolierschichten (11, 46) der beiden Chips (10, 13) ausgeführt wird.

8. Infrarotdetektor (9), der enthält:
- einen Sensorchip (10), der Transistoren (40) enthält
▪ die einerseits mit Mikrobolometer (41) verbunden sind, die auf einer tiefen Oxidschicht (45) suspendiert montiert sind, und,
▪ andererseits über ein metallisches Verbindungsnetz (61) mit Kontakten (17), die aus einer Isolierschicht (11) herausragen; und
- einen zweiten Chip (13), der Transistoren (24) enthält, die mit Kontakten (17), die aus einer Isolierschicht (46) herausragen, verbunden sind;
***dadurch gekennzeichnet, dass*** die Kontakte (17) und die Isolierschicht (11) des erwähnten Sensorchips (10) mit den Kontakten (23) und der Isolierschicht (46) dieses zweiten Chips (13) verbunden sind.

9. Infrarotdetektor nach Anspruch 8, ***bei dem*** die Transistoren (24) dieses zweiten Chips (13) die Transistoren (40) des erwähnten Sensorchips (10) ergänzen, um einen Ausleseschaltkreis der Mikrobolometer (41) herzustellen.

10. Infrarotdetektor nach Anspruch 8, ***bei dem*** die Transistoren (24) dieses zweiten Chips (13) eine digitale Verarbeitung eines Signals von diesem Sensorchip (10) durchführen.

## Claims

1. A method of manufacturing an infrared detector (9) comprising the steps of:
- hybrid bonding of a detection chip (10) onto a second chip (13), and during the hybrid bonding;
▪ said detection chip (10) comprising a substrate (80) topped with a deep oxide layer (45), a fully depleted semiconductor layer (42) integrating transistors (40), a metal interconnection network (61), and an insulator layer (11);
▪ said detection chip (10) comprising a hybridization surface (30) having contacts (17) emerging from said insulator layer (11), and connected to the metal interconnection network (61); and
▪ said second chip (13) comprising a substrate (22) having transistors (24) and contacts (23) emerging from an insulator layer (46) at the level of a hybridization surface (31) formed therein;
the hybrid bonding step being formed by adhesion of the contacts (17, 23) and of the insulator layers (11, 46) of the two chips (10, 13);
- removal of the substrate (80) of said detection chip (10) to reach said deep oxide layer (45);
- forming of conductive pads (50) through said deep oxide layer (45) to reach the transistors (40) present in said semiconductor layer (42); and
- forming of microbolometers (41) suspended over said deep oxide layer (45) and electrically connected to the conductive pads (50).

2. Method of manufacturing an infrared detector according to claim 1, ***wherein*** the method also comprises a step of forming a metal reflector (60) on said deep oxide layer (45).

3. Method of manufacturing an infrared detector according to claim 2, ***wherein*** the method also comprises a step of forming of contacts (63) through said deep oxide layer (45) to reach an area (59) of said semiconductor layer (42) connected to the metal interconnection network (61), said metal reflector (60) being formed on said contacts (63) to form an electrode or a ground plane.

4. Method of manufacturing an infrared detector according to any of claims 1 to 3, ***wherein*** said semiconductor layer (42) is divided, in the footprint of each pixel into a plurality of distinct areas (53, 57, 58) forming an injection transistor, the step of forming microbolometers (41) being carried out to connect in series each microbolometer (41) onto an injection transistor.

5. Method of manufacturing an infrared detector according to claim 4, ***wherein*** the distinct areas (53, 57, 58) of said semiconductor layer (42) form a MOSFET-type transistor.

6. Method of manufacturing an infrared detector according to any of claims 1 to 5, ***wherein*** the step of forming conductive pads (50) and the step of forming microbolometers (41) suspended over said deep oxide layer (45) are carried out by the use of at least one sacrificial layer (70).

7. Method of manufacturing an infrared detector according to any of claims 1 to 6, ***wherein*** said hybrid bonding step is carried out by thermocompression of the contacts (17, 23) and by molecular bonding of the insulator layers (11, 46) of the two chips (10, 13).

8. Infrared detector (9) comprising:
- a detection chip (10) comprising transistors (40),
▪ connected on the one hand to microbolometers (41) suspended over a deep oxide layer (45), and
▪ connected on the other hand, through a metal interconnection network (61), to contacts (17) emerging from an insulator layer (11); and
- a second chip (13) integrating transistors (24) connected to contacts (23) emerging from an insulator layer (46);
***wherein*** the contacts (17) and the insulator layer (11) of said detection chip (10) are bonded to the contacts (23) and the insulator layer (46) of said second chip (13).

9. Infrared detector according to claim 8, ***wherein*** the transistors (24) of said second chip (13) complete the transistors (40) of said detection chip (10) to form a circuit for reading from the microbolometers (41).

10. Infrared detector according to claim 8, ***wherein*** the transistors (24) of said second chip (13) perform a digital processing of a signal originating from said detection chip (10).
